# EUROPEAN PATENT SPECIFICATION

(11) **EP 2 765 098 B1**
(45) Date of publication and mention of the grant of the patent: **16.10.2019**
(21) Application number: 14153929.6
(22) Date of filing: 05.02.2014
(51) Int. Cl.: B65G 47/31, B65G 57/10, B65G 57/18

(54) **Arrangement for collecting timber members to wood layers and stacking device with such an arrangement**
Anordnung zum Gruppieren von Holzprodukten und Stappelvorrichtung mit einer solcher Anordnung.
Dispositif pour grouper des éléments en bois et palettiseur avec un tel dispositif.

(30) Priority: 06.02.2013 SE 1350140
(43) Date of publication of application: 13.08.2014
(73) Proprietor: Renholmen AB, 930 47 Byske (SE)
(72) Inventor: Lundmark, Tobias, 931 98 Skellefteå (SE)
(74) Representative: Zacco Sweden AB

(56) References cited:
- WO-A1-2013/074019
- DE-A1- 19 513 300
- FR-A1- 2 493 814
- SE-B- 458 199
- US-A- 2 184 905
- US-A- 5 141 219
- US-B1- 6 220 423

## Description

The present invention concerns an arrangement for the collection of timber members into layers with a pre-determined width in a timber stacker, in particular, the collection of planed timber members from a feed transporter in order to form a layer of the timber members on the said collection arrangement. The invention concerns also a combination of arrangements for the delivery of a layer of timber that has been formed to a transfer arrangement arranged to transfer the layer of timber to a stack in order to form a timber package.

This type of arrangement is normally a part of a larger facility or line for the packaging of sawn or planed timber. Timber members collected in layers are fed forwards to a location for the formation of stacks at which the layers that have been fed forwards are placed one on another, with or without stacking laths, on a carrier that can be raised and lowered, which carrier is arranged such that it is displaced successively downwards during the growth of the package in a corresponding degree, until the package is complete. The formation of stacks takes place with the aid of a transfer arrangement with a support plane that can perform cyclical motion that, during the execution of reciprocating motion, transfers one layer at a time through the lifting up from below of the layer, taking the layer forwards, and depositing the layer onto the carrier that can be raised and lowered.

From SE 458 199 is known a prior art arrangement according to the preamble of claim 1, for the collection and formation of layers which use what is known as a "layer stamp", i.e. a stop arrangement that when it is present in a raised condition permits the building of a layer by preventing timber members from moving forwards on a feed transporter. When a sufficient amount of timber members to form a layer for a timber package has been collected, a signal is given to a layer separation arrangement, which holds a subsequent timber member fixed in compression. After this, timber members that have been fed forwards are collected as they arrive at the layer-separation arrangement. When a layer of timber has been completely formed, the stop arrangement is lowered whereby the layer is released onto a transfer transporter and is lifted from below while it is undergoing rapid acceleration, from stationary to a speed that is adapted to the speed at which the support plane of the transfer arrangement moves forwards, by the said support plane for its delivery to the carrier that can be raised and lowered.

It is desired to make the formation of layers more efficient and it would be advantageous for this if it were possible to form the layer without it being necessary to stop the timber members at any position, but rather allowing them to move forwards continuously while a layer with the desired width is formed. One problem, which is particularly large during the formation of layers from planed timber members, are the forces of acceleration and retardation to which the timber members are exposed during the step in which the layer is formed, which forces may lead to control of the timber members being lost. Planed wood, in particular, which rests on a transporter with only low friction, tends to slide in an uncontrolled manner and to become disorganised on a transporter, even under relatively low forces of acceleration and retardation, which limits the speed with which a layer construction arrangement can be run, and thus also limits the capacity of a complete facility for the packaging of timber.

The said prior art collection arrangements furthermore require a relatively large space, which is a result, not least, of the need to stop and store the timber members during the layer construction phase. Layer construction arrangements that require a smaller space have the advantage that they can be installed and used within an existing limited space in a building.

Other prior art using feed transporters and conveyors is also known from DE 195 13 300 and WO 2013/074019.

A first purpose of the present invention, therefore, is to achieve an arrangement that makes it possible to form layers of timber with a pre-determined width while the timber members are in forwards motion during the complete period. A second purpose of the invention is to achieve a combination of arrangements that makes possible improved control over the timber members not only during the step of constructing the layer but also during a transfer step, i.e. during the step in which a layer that has been formed is lifted from below by the support plane of the transfer arrangement for the formation of a stack.

These purposes of the invention are achieved through an arrangement for the construction of layers of timber members that demonstrates the distinctive features and characteristics that are stated in claim 1, and a combination of arrangements as specified in claim 5.

As a basis of the invention lies the insight that in the case in which the timber members do not need to be stopped at any position during the process of forming a layer, but can move forwards with essentially retained speed while a layer of the desired width is formed, the forces of acceleration and retardation that arise can be minimised. As a result of the timber members retaining their forwards speed, and - in contrast to prior art technology - not needing to be accelerated from stationary, the forces of acceleration that affect a layer of timber that is accelerated up to be synchronous with, or to move with the same speed forward as, the transfer arrangement during the transfer operation are minimised. A very high rate of deposition can be achieved due to the use of a collection transporter with double sub-transporters that work in an alternating manner. When double sub-transporters are used, one can receive and collect one layer of timber while the other at the same time can accelerate a previously formed layer to a speed that is adapted to the speed of the transport arrangement when the layer is transferred.

An embodiment of the invention will be described below in more detail with reference to attached drawings, of which:

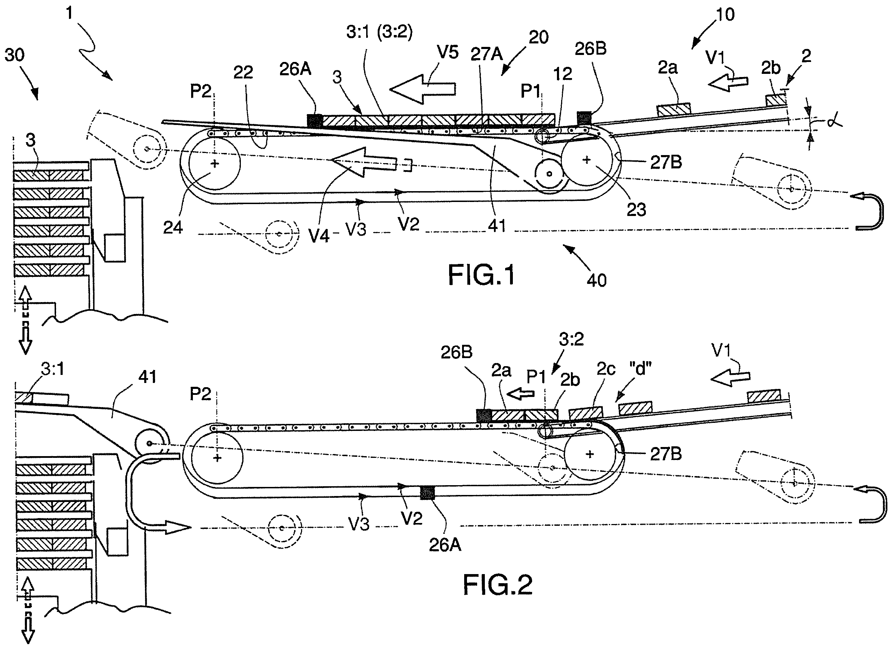

Figure 1 shows schematically a side view of an arrangement according to the invention when it is carrying out the final sequence of a layer construction step at a layer formation transporter, whereby a collected layer with a pre-determined width has started acceleration to a speed that is synchronous with the speed with which the support plane of the transfer arrangement moves forwards at the moment at which the layer is lifted from below by the said support plane,
Figure 2 shows schematically a side view of the arrangement according to Figure 1, but now when it is carrying out an initial sequence of a layer construction step, whereby the timber members are successively transferred from a feed transporter to the layer formation transporter in order to form a layer of timber members on this,

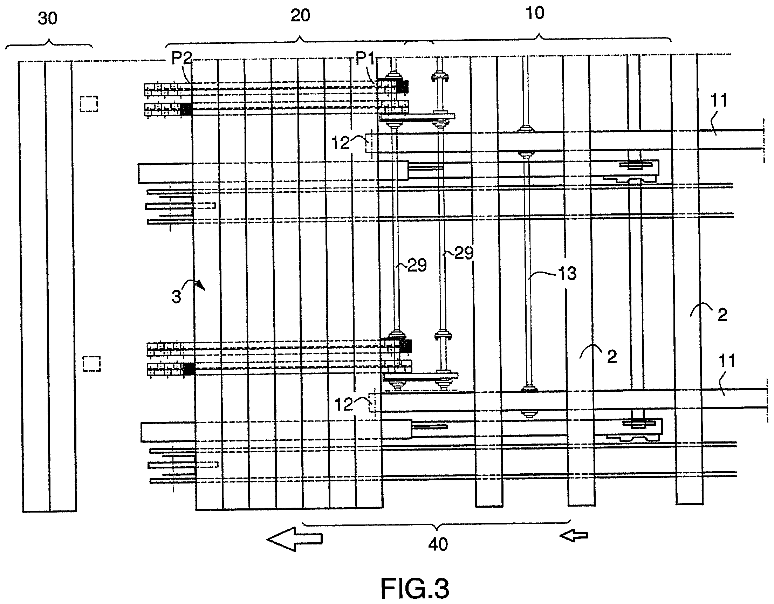

Figure 3 shows a plan view of the arrangement shown in Figures 1 and 2,

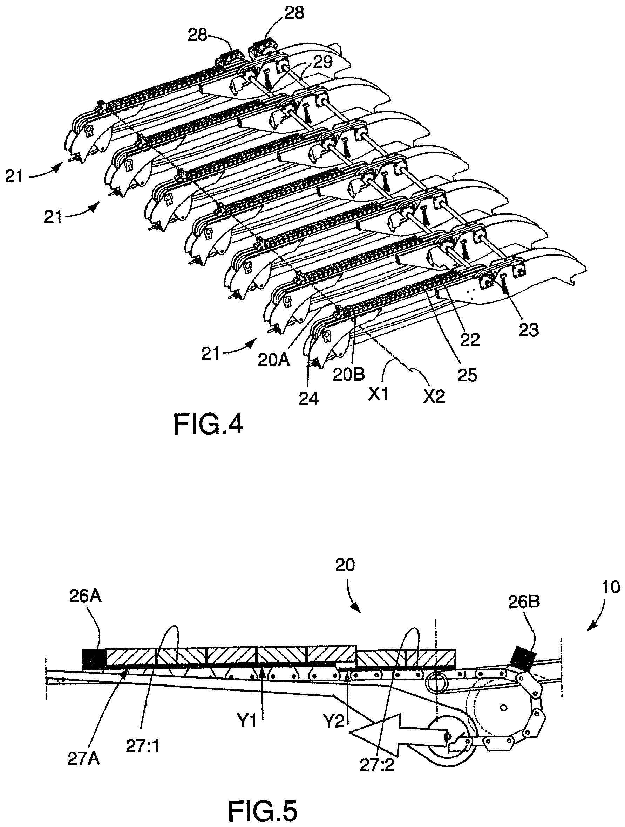

Figure 4 shows a perspective view of a layer formation transporter that is a component of the present layer construction arrangement, and
Figure 5 shows an enlargement of detail of timber-carrying surfaces of the layer formation transporter, in a design in which the said surfaces are arranged at different levels of height, with a forward higher part and rearward lower part seen in the direction of transport, and coated with an elastomer that offers a support surface with relatively high friction.

With reference to Figures 1 and 2, an arrangement 1 for the collection of timber members 2 to form layers of timber 3 is shown. The arrangement is intended to form part of a stacker or production line for the packaging of timber that has been sawn to planks and it has its particular use for the handling of planed, and thus relatively "slippery", timber. The arrangement has the task of collecting timber members 2 that are transported in a direction transverse to their length, and forming layers 3 of timber from such members. The timber members 2 are collected to layers 3 with the number (n) of timber members required to achieve a pre-determined width, which width is, in turn, adapted to the desired width of a completed timber package.

In the drawings, there is generally denoted by 10 a feed transporter on which the timber members 1 are fed forwards distributed with a gap "d" or a distance between them, there is denoted by 20 a collection transporter whose task is to collect a number of timber members 3 and to form layers of timber from these, there is denoted by 30 a carrier that can be raised and lowered intended to support layers of timber stacked one on top of the other and arranged such that it moves as the package grows successively downwards until the package is complete, there is denoted by 40 a transfer arrangement that transfers, with the aid of a support plane 41 that can perform cyclical motion and that carries out reciprocating motion, one layer 3 at a time through lifting up the layer from the collection transporter from below, taking the layer forwards, and depositing it onto the carrier 30 that can be raised and lowered.

The feed transporter 10 comprises a number of endless transport elements 11 or belts that lie next to each other and whose timber-carrying surfaces demonstrate relatively low friction. The transport elements 11 pass around an end wheel 12 that is mounted in bearings on a horizontal axis. The end wheel 12 extends a distance into and under the subsequent collection transporter in a manner that is made most clear by Figures 1-3, such that an intersection is formed, and the timber members 2 can be transferred from the feed transporter 10 to the collection transporter 20. Careful study of Figures 1 and 2 should make it clear that the transport plane of the feed transporter 10 is tilted downwards towards the horizontal plane at an angle denoted by a, which in this case is approximately 5°. The speed V of the feed transporter 10, measured as the number of timber members 2 per unit time, may be regulated as desired with the aid of a variator, connected to a drive shaft 13 for the transport elements 11 of the feed transporter and shown in Figure 4.

The collection transporter 20, which is located after the feed transporter 10 when seen in the direction of transport of the timber members 2, comprises a number of collection segments 21, in this case seven, as shown in Figure 4, arranged next to each other and transverse to the direction of feed.

With continued reference to Figure 4, each collection segment 21 demonstrates a pair of a first and a second sub-transporter 20A, 20B, each one of which comprises an endless transport element 22 consisting of a chain arranged to run in an endless path over a rear driving wheel 23 and a forward driving wheel 24, respectively, seen in the direction of transport of the timber members. The transport element 22 thus runs in a plane that is parallel to the direction of transport of the timber.

As is made most clear by Figure 3, the transport elements of the first and second sub-transporters 20A, 20B run parallel to each other, but are located displaced sideways a distance from each other when seen in the longitudinal direction of the timber members. The first and second sub-transporter 20A, 20B in each collection segment 21 each has an upper active part of the chain, which is guided by a rail 25. All of the collection elements 21 that lie along one line are located at essentially the same level of height and form in this way a common transport plane that is principally horizontal. The first and second sub-transporters 20A, 20B are equipped around their periphery each with a counteracting unit 26A, 26B whose task it is to exert a stopping effect against a forward edge of a timber member that, passing a transfer point PI, is transferred from the feed transporter 10 to the collection transporter 20. With respect to the direction of rotation of the sub-transporters 20A, 20B, there is located behind each counteracting unit 26A, 26B a timber-carrying surface 27A, 27B. This timber-carrying surface 27A, 27B is located on a level somewhat above the upper edge of the chain and it is appropriate that it comprise a material with a relatively high friction, for example an elastomer. The counteracting units 26A, 26B are constituted by elevated blocks, each one of which extends radially outwards from the centre of the transport elements. The counteracting units 26A and 26B of the first and second sub-transporters 20A, 20B, respectively, are each attached at the outer surface of the periphery of the transport element, and move in a path accompanying a relevant transport element 22.

The timber-carrying surface 27A, 27B is shown in Figure 5 in an alternative design and arranged as two timber-carrying parts 27:1, 27:2 located at different levels of height, whereby a forward part 27:1 seen in the direction of transport is located at a somewhat higher level Y1 than a rear part 27:2, located at level Y2. Depending on the dimensions of the timber and the total width of a layer of timber that has been formed, it may be necessary in certain applications with particularly broad layers to arrange the timber-carrying surfaces at different levels 27:1, 27:2, in order to minimise the risk that the timber members 2 rest at the same time on both the first and the second sub-transporters 20A, 20B.

As is made most clear by Figure 4, the first and second sub-transporters 20A, 20B are each driven by an electric motor 28 with a rate of revolution that can be regulated, whereby the speeds of the first and second sub-transporters, denoted by V2 and V3 respectively in Figures 1 and 2, can be varied independently of each other. A first and a second drive mechanism, each one of which comprises a drive shaft 29 and transmission, ensures that the series of counteracting units 26A of the first sub-transporter 20A and the series of counteracting units 26B of the second sub-transporter 20B can move synchronously in the direction of feed of the timber and, being present on a common line X1, X2 transverse to the direction of feed. It is understood that the relative distance between these two transverse lines of counteracting units 26A, 26B in the direction of feed of the timber can be varied through accelerating or retarding the first and second sub-transporters 20A, 20B relative to each other.

With reference to Figures 1, 2 and 3, the transfer arrangement 40 that is used to transfer one layer at a time through lifting a layer from below up from the collection transporter, taking the layer forwards and depositing the layer down onto the carrier 30 that can be raised and lowered is shown. The transfer arrangement comprises a support plane 41 that is arranged to move cyclically along a pathway through the execution of a reciprocating motion by means of parallel transfer arms, which are only suggested by dash-dot lines in the drawing. Since this type of transfer arrangement with support planes that move in a cyclical manner has been known for a long time, from, for example, SE 434 167 C2, its function will not be described in detail.

The support plane 41 is located in Figure 1 at a position such that it is a continuation of the collection transporter 20 and, during the execution of a linear motion from a lower waiting position to an upper position that is illustrated with an arrow, lifting a layer 3 from below and transferring the layer from the collection transporter 20 to the carrier 30 that can be raised and lowered. The support plane is shown in Figure 2 in a position above the carrier 30 that can be raised and lowered and immediately before it moves downwards and backwards, as is illustrated with the arrow, in order to deliver the layer 3 onto the carrier 30 that can be raised and lowered.

The present collection arrangement functions in the following manner:
With reference to Figure 1, a number of timber members 2a, 2b-2n are fed forwards individually distributed, i.e. separated from each other by a gap or a distance between them, on the transport elements 11 of the feed transporter 10 at a speed V1 and onwards down towards the timber-carrying surface 27B of the second sub-transporter 20B of the collection transporter 20. The counteracting unit 26B of the sub-transporter 20B is in this case located at a reception condition in which the rear edge of the counteracting unit 26B is located at a first transfer point P1, i.e. the point at which the transport means 11, 20B of the feed transporter 10 and the collection transporter 20 intersect. A previously formed layer of timber 3:1 is present on the first sub-transporter 20A.

When the forward edge of the first timber member 2a comes into contact with the counteracting unit 26B of the second sub-transporter 20B, the said counteracting unit starts to move forwards at a speed V2 that is so adapted relative to the speed V1 of the feed transporter 10 that, when the rear edge of the said first timber member 2a reaches the first transfer point P1, the forward edge of a subsequent second timber member 2b docks with the rear edge of the first timber member 2a, and so on. This successive docking is made most clear by Figure 2. Due to the fact that the speed V2 of the counteracting unit 26B of the second sub-transporter 20B is lower than the speed V1 of the feed transporter, i.e. V2<V1, the gap "d" between the individually distributed timber members 2a and 2b will be reduced to zero.

As is made most clear by Figure 2, the timber members 2a, 2b will come successively to form a layer 3:2, the forward edge of which makes contact in a supporting manner with the counteracting unit 26B of the second sub-transporter 20B, next to each other at the forward and rear edges and resting on the timber-carrying surface 27B of the said sub-transporter. Due to the fact that a certain amount of play is allowed against the transport elements 11 of the feed transporter 10, the members 2a, 2b-2n of the layer of timber 3:2 strive to always be close to each other.

When the final timber member 2n of a number "n" of timber members that are members of a layer 3:2 with a pre-determined width arrives at the first transfer point P1, the first sub-transporter 20A starts. This first sub-transporter 20A is now empty since in a previous step not shown in the drawings it has left the layer 3:1 to the transfer arrangement 40 for the delivery of the layer onto the carrier 30 that can be raised and lowered. The counteracting unit 26A of the first sub-transporter 20A in this case moves forwards and around the driving wheel 23 such that it is located behind the final timber member 2n of the layer (which corresponds in principle once again to the condition shown in Figure 1).

The second sub-transporter 20B is at the same time accelerated to a speed that corresponds to or is so adapted to the speed V1 of the feed transporter 10 that a gap is formed between the final timber member 2n in the layer 3:2 that has been formed and a subsequent timber member intended to form the first piece of timber in a subsequent layer 3:3 (not shown in the drawings). When the rear edge of the final piece of timber 2n in the layer 3:2 has passed the transfer point P1 with a certain clearance, the layer 3 is accelerated up to a speed V5 (see Figure 1 whereby this layer 3:2 is located at a position that corresponds to that of the layer 3:1) that is synchronised with the speed V4 with which the support plane 41 of the transfer arrangement 40 moves obliquely upwards in order to lift the layer from the collection transporter 20. The layer 3:2 that has been formed is transfer to the support plane 41 of the transfer arrangement 40 at a second transfer point P2 that is located above the centre of the forward end wheel 24 of the sub-transporter 20A, 20B, and at which point the two motions intersect during the complete transfer step. When the complete layer 3:2 has been transferred to the support plane 41, the counteracting unit 26B of the sub-transporter 20B is accelerated to a high speed, until it reaches the waiting position under the forward part of the feed transporter 10.

It should be pointed out for reasons of clarity that the counteracting units 26A, 26B described above are not necessary to achieve the technical effect that is intended by the invention. It should be understood that the risk that timber members slide or are displaced in an uncontrolled manner during the procedure of forming layers is minimised to an even higher degree with the aid of the counteracting units.

The invention is not limited to what has been described above and shown in the drawings: it can be changed and modified in several different ways within the scope of the invention defined by the attached patent claims.

## Claims

1. An arrangement for the collection of timber members and the formation of layers of timber members for a timber package, each of said layers having a pre-determined width, comprising:
- a feed transporter (10) having several endlessly running transport elements (11) that move around a pathway with a pre-determined speed (V1) and on which transport elements (11) the timber members (2) distributed with gaps between them are transported in a direction transverse to their length, and
- a collection transporter (20) arranged to receive the timber members from the feed transporter and to collect them together into layers (3) in a layer-constructing step, the collection transporter (20) having a plurality of endlessly running transport elements (22) that move around a pathway,
wherein the transport elements (11) of the feed transporter (10) and the transport elements (22) of the collection transporter (20) are displaced sideways from each other and are partially interacting with each other at their ends that meet in order to allow timber members to be transferred between them at a first transfer point (P1) defined as an intersection in a pathway of motion between the transport elements (11) of the feed transporter (10) and the transport elements (22) of the collection transporter (20), and wherein the feed transporter (10) and the collection transporter (20) are synchronised with such speeds relative to each other that the gap that appears between transferred timber members is reduced, and that transferred timber members come into contact with each other at the collection transporter (20) in the layer constructing step,
**characterised in**
- **that** the collection transporter (20) comprises a number of collection segments (21) that are arranged next to each other and lie transverse to the direction of feed of the timber members (2), each one of said collection segments comprises a first sub-transporter (20A) and a second sub-transporter (20B) arranged next to each other, each one of the sub-transporters has one of said endlessly running transport elements (22) that move around a pathway,
- **that** the transport element (22) of each sub-transporter (20A, 20B) is equipped along a radially outwardly directed part of the sub-transporter's circumference with a timber-carrying surface (27A, 27B) located at a level (Y1) somewhat above the transport element (22),
- **that** the first sub-transporters (20A) are driven by a first electric motor (28) with a rate of revolution that is regulated and the second sub-transporters (20B) are driven by a second electric motor (28) with a rate of revolution that is regulated, whereby the speed (V2) of the first sub-transporters (20A) and the speed (V3) of the second sub-transporters (20B) are varied independently of each other, such that the first sub-transporters receive and collect one layer of timber members while the second sub-transporters at the same time accelerate a previously formed layer of timber members to a speed adapted to the speed of a transfer arrangement by which a layer is transferred, and vice versa.

2. The arrangement according to claim 1, whereby each first and second sub-transporter (20A, 20B) is equipped at its endlessly running transport element (22) with a radially outwardly directed counteracting unit (26A, 26B), the timber-carrying surface (27A, 27B) being located immediately behind the counteracting unit (26A, 26B), so that the counteracting unit (26A, 26B) provides a stopping effect against a forward edge of the first timber member (2) hat has been transferred to form a layer.

3. The arrangement according to any one of claims 1-2, whereby the timber-carrying surface (27A, 27B) comprises a material with a relatively high friction, for example, an elastomer.

4. The arrangement according to any one of claims 1-3, whereby the timber-carrying surface (27A, 27B) is divided into two parts (27:1, 27:2) that are located at different levels of height (Y1, Y2), in which a forward part (27:1), seen in the direction of transport, is located at a somewhat higher level than a backward part (27:2).

5. An arrangement for the layerwise construction of timber packages, including a combination that comprises:
(a) an arrangement for the collection of timber members and the formation of layers of timber members for a timber package, each of said layers having a pre-determined width, in accordance to claim 1,
(b) a transfer arrangement (40) comprising a support plane (41) that can move along a cyclical path that, during the execution of reciprocating motion, transfers one layer (3) at a time through the lifting up from below of the layer at a pre-determined speed (V4), taking the layer forwards, and depositing the layer onto a carrier (30) that can be raised and lowered,
wherein the transport elements (22) of each first and second sub-transporter (20A, 20B) and the support plane (41) of the transfer arrangement (40) are synchronised to such speeds (V2, V5 and V4) relative to each other that the two motions intersect at a second transfer point (P2) during the complete transfer step, and a collected layer (3) is lifted from below from the collection transporter (20) by the said support plane.

6. The arrangement according to claim 5, whereby the second transfer point (P2) is defined as the intersection point in a pathway of motion between the transport elements (22) of first and second each sub-transporter (20A, 20B) and the direction of motion of the support plane (41) of the transfer arrangement when it lifts a layer (3) from below.

7. The arrangement according to any one of claims 5-6, whereby the second transfer point (P2) is located above the centre of forward end driving wheels (24) that are components of the first and second sub-transporters (20A, 20B) and at which point the two motions cross each other during the complete transfer step.

## Patentansprüche

1. Anordnung zum Sammeln von Holzprodukten und zur Bildung von Holzproduktschichten für ein Holzpaket, wobei jede der Schichten eine vorgegebene Breite hat, umfassend:
- eine Zufuhrtransporteinrichtung (10) mit mehreren endlos laufenden Transportelementen (11), die sich mit einer vorbestimmten Geschwindigkeit (V1) um eine Bahn herumbewegen, und auf welchen Transportelementen (11) die Holzprodukte (2), verteilt mit Abständen zwischen ihnen, in einer zu ihrer Länge queren Richtung transportiert werden, und
- eine Sammlungstransporteinrichtung (20), angeordnet um die Holzprodukte von der Zufuhrtransporteinrichtung zu empfangen und sie in einem Schicht konstruierenden Schritt in Schichten (3) zusammen zu sammeln, wobei die Sammlungstransporteinrichtung (20) eine Mehrzahl von endlos laufenden Transportelementen (22) aufweist, die sich um eine Bahn herumbewegen, wobei die Transportelemente (11) der Zufuhrtransporteinrichtung (10) und die Transportelemente (22) der Sammlungstransporteinrichtung (20) seitwärts zueinander versetzt sind, und teilweise miteinander zusammenwirken an ihren Enden, die sich treffen, um zuzulassen, dass Holzprodukte an einem ersten Überführungspunkt (P1), der als ein Schnittpunkt in einer Bewegungsbahn zwischen den Transportelementen (11) der Zufuhrtransporteinrichtung (10) und den Transportelementen (22) der Sammlungstransporteinrichtung (20) definiert ist, zwischen ihnen überführt werden, und wobei die Zufuhrtransporteinrichtung (10) und die Sammlungstransporteinrichtung (20) mit einer solchen Geschwindigkeit im Verhältnis zueinander synchronisiert sind, dass der Abstand, der zwischen den überführten Holzprodukten hervorgeht, reduziert wird, und dass überführte Holzprodukte an der Sammlungstransporteinrichtung (20) im Schicht konstruierenden Schritt in Kontakt miteinander kommen, **dadurch gekennzeichnet,**
- **dass** die Sammlungstransporteinrichtung (20) eine Anzahl von Sammlungssegmenten (21) umfasst, die nebeneinander angeordnet sind, und die quer zur Zufuhrrichtung der Holzprodukte (2) liegen, wobei jedes der Sammlungssegmente eine erste Untertransporteinrichtung (20A) und eine zweite Untertransporteinrichtung (20B) umfasst, die nebeneinander angeordnet sind, wobei jede der Untertransporteinrichtungen eines der endlos laufenden Transportelemente (22) aufweist, die sich um eine Bahn herumbewegen,
- **dass** das Transportelement (22) jeder Untertransporteinrichtung (20A, 20B) entlang eines radial nach außen weisenden Teils des Umkreises der Untertransporteinrichtung mit einer Holz tragenden Oberfläche (27A, 27B) ausgestattet ist, die auf einem Niveau (Y1) etwas oberhalb des Transportelements (22) angeordnet ist,
- **dass** die ersten Untertransporteinrichtungen (20A) von einem ersten Elektromotor (28) mit einer regulierten Umlaufrate angetrieben werden und die zweiten Untertransporteinrichtungen (20B) von einem zweiten Elektromotor (28) mit einer regulierten Umlaufrate angetrieben werden, wobei die Geschwindigkeit (V2) der ersten Untertransporteinrichtungen (20A) und die Geschwindigkeit (V3) der zweiten Untertransporteinrichtungen (20B) unabhängig voneinander variiert werden, so dass die ersten Untertransporteinrichtungen eine Holzproduktschicht empfangen und sammeln, während die zweiten Untertransporteinrichtungen gleichzeitig eine früher gebildete Holzproduktschicht beschleunigen auf eine Geschwindigkeit, die ausgelegt ist auf die Geschwindigkeit einer Überführungsanordnung durch welche eine Schicht überführt wird, und umgekehrt.

2. Anordnung nach Anspruch 1, wobei jede erste und zweite Untertransporteinrichtung (20A, 20B) an ihrem endlos laufenden Transportelement (22) mit einer radial nach außen weisenden entgegenwirkenden Einheit (26A, 26B) ausgestattet ist, wobei die Holz tragende Oberfläche (27A, 27B) direkt hinter der entgegenwirkenden Einheit (26A, 26B) angeordnet ist, so dass die entgegenwirkende Einheit (26A, 26B) einen Stoppeffekt gegen eine vordere Kante des ersten Holzprodukts (2), das überführt worden ist, um eine Schicht zu bilden, bereitstellt.

3. Anordnung nach einem der Ansprüche 1 bis 2, wobei die Holz tragende Oberfläche (27A, 27B) ein Material mit relativ hoher Reibung umfasst, zum Beispiel ein Elastomer.

4. Anordnung nach einem der Ansprüche 1 bis 3, wobei die Holz tragende Oberfläche (27A, 27B) eingeteilt ist in zwei Teile (27: 1, 27:2), die auf verschiedenen Höhenniveaus (Y1, Y2) angeordnet sind, wobei ein vorderer Teil (27: 1) in Transportrichtung auf einem etwas höheren Niveau angeordnet ist als ein hinterer Teil (27:2).

5. Anordnung für die schichtweise Konstruktion von Holzpaketen, einschließlich einer Kombination umfassend:
(a) eine Anordnung zum Sammeln von Holzprodukten und der Bildung von Holzproduktschichten für ein Holzpaket, wobei jede der Schichten eine vorgegebene Breite hat, nach Anspruch 1,
(b) eine Überführungsanordnung (40) umfassend eine Abstützebene (41), die sich entlang einer zyklischen Bahne bewegen kann, der, während der Ausführung einer Hin- und Herbewegung, eine Schicht (3) nach der anderen überführt durch das Abheben von unten der Schicht bei einer vorgegebenen Geschwindigkeit (V4), dabei nach vorne bringen der Schicht, und Ablegen der Schicht auf einen Träger (30), der gehoben und gesenkt werden kann,
wobei die Transportelemente (22) der ersten und zweiten Untertransporteinrichtung (20A, 20B) und die Abstützebene (41) der Überführungsanordnung (40) auf solche Geschwindigkeiten (V2, V5 und V4) im Verhältnis zueinander synchronisiert sind, dass die zwei Bewegungen sich an einem zweiten Überführungspunkt (P2) während dem gesamten Überführungsschritt schneiden, und eine gruppierte Schicht (3) durch die Abstützebene von unten von der Sammlungstransporteinrichtung (20) abgehoben wird.

6. Anordnung nach Anspruch 5, wobei der zweite Überführungspunkt (P2) als der Schnittpunkt in einer Bewegungsbahn zwischen den Transportelementen (22) der ersten und zweiten jeder Untertransporteinrichtung (20A, 20B) und die Bewegungsrichtung der Abstützebene (41) der Überführungsanordnung, wenn sie eine Schicht (3) von unten abhebt, definiert ist.

7. Anordnung nach einem der Ansprüche 5 bis 6, wobei der zweite Überführungspunkt (P2) über der Mitte von vorderen Endantriebsrädern (24), die Bestandteile der ersten und zweiten Untertransporteinrichtung (20A, 20B) sind, angeordnet ist und an welchem Punkt sich die beiden Bewegungen während dem gesamten Überführungsschritt kreuzen.

## Revendications

1. Dispositif pour la collecte d'éléments de bois et la formation de couches d'éléments de bois pour un paquet de bois, chacune desdites couches ayant une largeur prédéterminée, comprenant :
- un transporteur d'alimentation (10) ayant plusieurs éléments de transport à roulement sans fin (11) se déplaçant autour d'une trajectoire avec une vitesse prédéterminée (V1), et sur ces éléments de transports (11) les éléments de bois (2), répartis avec des espaces entre eux, sont transportés dans une direction transversale à leur longueur, et
- un transporteur de collecte (20) conçu pour recevoir les éléments de bois provenant du transporteur d'alimentation et pour les rassembler en couches (3) lors d'une étape de construction de couches, le transporteur de collecte (20) ayant une pluralité d'éléments de transport à roulement sans fin (22) se déplaçant autour d'une trajectoire,
dans lequel les éléments de transport (11) du transporteur d'alimentation (10) et les éléments de transport (22) du transporteur de collecte (20) sont décalés latéralement les uns des autres et interagissent partiellement les uns avec les autres à leurs extrémités qui se rencontrent afin de permettre le transfert d'éléments de bois entre eux à un premier point de transfert (P1) défini comme une intersection dans une trajectoire de mouvement entre les éléments de transport (11) du transporteur d'alimentation (10) et les éléments de transport (22) du transporteur de collecte (20), et dans lequel le transporteur d'alimentation (10) et le transporteur de collecte (20) sont synchronisés avec des vitesses l'une par rapport à l'autre telles que l'espace qui apparaît entre les éléments de bois transférés est réduit et que les éléments de bois transférés entrent en contact les uns avec les autres au niveau du transporteur de collecte (20) lors de l'étape de construction de couches,
**caractérisé en ce que**
- le transporteur de collecte (20) comprend un nombre de segments de collecte (21) agencés l'un à côté de l'autre et s'étendant transversalement à la direction d'alimentation des éléments de bois (2), chacun desdites segments de collecte comprenant un premier sous-transporteur (20A) et un deuxième sous-transporteur (20B) agencés l'un à côté de l'autre, chacun des sous-transporteurs ayant l'un des éléments de transport à roulement sans fin (22) se déplaçant autour d'une trajectoire,
- l'élément de transport (22) de chaque sous-transporteur (20A, 20B) est équipé, le long d'une partie dirigée radialement vers l'extérieur de la circonférence du sous-transporteur, d'une surface porte-bois (27A, 27B) située à un niveau (Y1) légèrement au-dessus de l'élément de transport (22),
- les premiers sous-transporteurs (20A) sont entraînés par un premier moteur électrique (28) avec une vitesse de rotation qui est régulée, et les deuxièmes sous-transporteurs (20B) sont entraînés par un deuxième moteur électrique (28) avec une vitesse de rotation qui est régulée, la vitesse (V2) des premiers sous-transporteurs (20A) et la vitesse (V3) des deuxièmes sous-transporteurs (20B) sont variées indépendamment l'une de l'autre si bien que les premiers sous-transporteurs reçoivent et collectent une couche d'éléments de bois tandis que les deuxièmes sous-transporteurs en même temps accélèrent une couche d'éléments de bois formée précédemment jusqu'à une vitesse adaptée à la vitesse d'un agencement de transfert par lequel une couche est transférée, et inversement.

2. Dispositif selon la revendication 1, dans lequel chaque premier et deuxième sous-transporteur (20A, 20B) est équipé à son élément de transport à roulement sans fin (22) d'une unité de contre-effet (26A, 26B) dirigée radialement vers l'extérieur, la surface porte-bois (27A, 27B) étant située immédiatement derrière l'unité de contre-effet (26A, 26B), si bien que l'unité de contre-effet (26A, 26B) produit un effet d'arrêt contre un bord avant du premier élément de bois (2) qui a été transféré pour former une couche.

3. Dispositif selon l'une quelconque des revendications 1 à 2, dans lequel la surface porte-bois (27A, 27B) comprend un matériau avec une friction relativement élevé, par exemple un élastomère.

4. Dispositif selon l'une quelconque des revendications 1 à 3, dans lequel la surface porte-bois (27A, 27B) est divisée en deux parties (27: 1, 27:2) situées à des niveaux de hauteur (Y1, Y2) différents, une partie avant (27: 1), vue dans le sens du transport, étant située à un niveau un peu plus élevé qu'une partie arrière (27:2).

5. Agencement pour la construction de paquets de bois en couches, comprenant une combinaison qui comprend :
a) un dispositif pour la collecte d'éléments de bois et la formation de couches d'éléments de bois pour un paquet de bois, chacune desdites couches ayant une largeur prédéterminée, selon la revendication 1,
(b) un agencement de transfert (40) comprenant un plan de support (41) pouvant se déplacer le long d'une trajectoire cyclique qui, pendant l'exécution d'un mouvement alternatif, transfère une couche (3) à la fois par soulèvement de dessous de la couche à une vitesse prédéterminée (V4), avançant la couche et déposant la couche sur un support (30) pouvant être élevé et abaissé,
dans lequel les éléments de transport (22) de chaque premier et deuxième sous-transporteur (20A, 20B) et le plan de support (41) de l'agencement de transfert (40) sont synchronisés à des vitesses (V2, V5 et V4) l'une par rapport à l'autre telles que les deux mouvements se croisent à un deuxième point de transfert (P2) au cours de l'étape de transfert complet, et une couche collectée (3) est soulevée du transporteur de collecte (20), de dessous, par ledit plan de support.

6. Agencement selon la revendication 5, dans lequel le deuxième point de transfert (P2) est défini comme le point d'intersection dans une trajectoire de mouvement entre les éléments de transport (22) de chaque premier and second sous-transporteur (20A, 20B) et la direction de déplacement du plan de support (41) de l'agencement de transfert lorsqu'il soulève une couche (3) de dessous.

7. Agencement selon l'une quelconque des revendications 5 à 6, dans lequel le deuxième point de transfert (P2) est situé au-dessus du centre des roues motrices d'extrémité avant (24) qui sont des composants des premier et deuxième sous-transporteurs (20A, 20B) et à quel point les deux mouvements se croisent pendant l'étape de transfert complet.
